# EUROPEAN PATENT SPECIFICATION

(11) **EP 3 700 862 B1**
(45) Date of publication and mention of the grant of the patent: **31.07.2024**
(21) Application number: 18803479.7
(22) Date of filing: 23.10.2018
(51) Int. Cl.: C01B 25/26, C01B 33/18, C08K 3/34, C08K 9/02, C08K 3/32, C08K 3/36

(54) **SILICA BASED NANOMATERIALS AS SUBSTITUTES FOR ZNO IN RUBBER COMPOUNDS AND PREPARATION THEREOF**
AUF KIESELSÄURE BASIERTE NANOMATERIALIEN ALS ERSATZ FÜR ZNO IN KAUTSCHUKVERBINDUNGEN UND DEREN HERSTELLUNG
NANOMATÉRIAUX À BASE DE SILICE EN TANT QUE SUBSTITUTS DE ZNO DANS DES COMPOSÉS DE CAOUTCHOUC ET LEUR PRÉPARATION

(30) Priority: 27.10.2017 IT 201700122793
(43) Date of publication of application: 02.09.2020
(73) Proprietor: Bridgestone Corporation, Tokyo 104-8340 (JP)
(72) Inventor: COSSU, Giancarlo, 00128 Roma (IT); PALUMBI, Maria Cecilia, 00128 Roma (IT); COMPARELLI, Roberto, 70126 Bari (IT); MARGIOTTA, Valerio, 70126 Bari (IT)
(74) Representative: Marchetti, Alessio
(86) International application number: PCT/IB2018/058237
(87) International publication number: WO 2019/082069

(56) References cited:
- ASIM BHAUMIK, SUJIT SAMANTA, NAWAL KISHOR MAL, PRASHANT KUMAR, ABHIJIT MANNA: "Highly dispersed zinc phosphate microdomains in mesoporous silica", CHEMICAL ENGINEERING SCIENCE, vol. 60, no. 3, February 2005 (2005-02-01), NL, pages 839 - 843, XP027646069, DOI: 10.1016/j.ces.2004.09.048
- L. EL MIR, K. OMRI, J. EL GHOUL: "Effect of crystallographic phase on green and yellow emissions in Mn-doped zinc silicate nanoparticles incorporated in silica host matrix", SUPERLATTICES AND MICROSTRUCTURES, vol. 85, 27 May 2015 (2015-05-27), NL, pages 180 - 184, XP002780549, DOI: 10.1016/j.spmi.2015.05.029
- L. EL MIR, B, K. OMRI, J. EL GHOUL, A.S. AL-HOBAIB, H. DAHMAN, C. BARTHOU: "Yellow emission of SiO2/Zn2SiO4:Mn nanocomposite synthesized by sol-gel method", SUPERLATTICES AND MICROSTRUCTURES, vol. 65, 2014, NL, pages 248 - 255, XP002780550, DOI: 10.1016/j.spmi.2013.11.006
- L. EL MIR, A. AMLOUK, C. BARTHOU, S. ALAYA: "Synthesis and luminescence properties of ZnO/Zn2SiO4/SiO2 compositebased on nanosized zinc oxide-confined silica aerogels", PHYSICA B, vol. 388, 2007, NL, pages 412 - 417, XP002780568, DOI: 10.1016/j.physb.2006.06.151
- DATABASE WPI Week 201714, Derwent World Patents Index; AN 2016-79858H, XP002780551
- DATABASE WPI Week 201403, Derwent World Patents Index; AN 2013-U22033, XP002780569
- DATABASE WPI Week 201365, Derwent World Patents Index; AN 2013-K34891, XP002780570
- DATABASE WPI Week 201721, Derwent World Patents Index; AN 2017-17299H, XP002780571
- DATABASE WPI Week 201672, Derwent World Patents Index; AN 2016-57231X, XP002780572

## Description

The present invention is related to a new class of silica based nanomaterials that may find application as vulcanization activators in rubber compounds and, therefore, as a substitute for ZnO.

Recently, one of the topics for research in the field of compounds for rubber products, such as for example pneumatic tyres, has been concentrated on a possible replacement for zinc oxide (ZnO) as the vulcanization activator.

Due to the possible environmental implications thereof, it is required that the use of ZnO be limited, if not completely eliminated.

The need was therefore felt for an alternative to the use of ZnO in rubber compounds, which could ensure an effective vulcanization process at least equal to that activated by ZnO and that at the same time would not involve issues of an environmental character.

KR20160140295 discloses silica nano-particles having a having cores with particle diameter of 300-2000 nm and shells obtained by uniformly coating the core with one or more biocompatible material, i.e. zinc phosphate, and ZnO, which can be applied dental bone transplant material, an implant, an artificial joint surface coating material, and a medical toothpaste product.

The Applicant has prepared new nanomaterials that can completely replace the presence within compounds of ZnO as the vulcanization activator according to the requirements cited above.

The object of the present invention is the use, as a vulcanization activator in compounds for the preparation of rubber products, of a silica based nanomaterial; said use being characterized in that said silica based nanomaterial consists of particles of a Zn salt chosen from between Zn₃(PO₄)₂ and Zn₂SiO₄ supported on the surface of silica nanoparticles.

Preferably, the nanomaterial has dimensions that are equal to or less than 100 nm by Transmission Electron Microscopy measurement.

Preferably, Zn₃(PO₄)₂ is present in a quantity of between 40 and 60% by weight in relation to the total weight of the nanomaterial.

Preferably, Zn₂Sio₄ is present in a quantity of between 20 and 40% by weight in relation to the total weight of the nanomaterial.

A further object of the present invention is a synthesis method for the preparation of a nanomaterial consisting of particles of a Zn salt chosen from between Zn₃(PO₄)₂ and Zn₂SiO₄ supported on the surface of silica nanoparticles; said method being characterized in that it comprises:
- a first step, wherein an aqueous solution A is produced with a pH of between 7.5 and 9.5 and comprising Zn(NO₃)₂.6H₂O at a concentration of between 10 and 50 mM, 1,1,1-Tri(hydroxymethyl)ethane at a concentration of between 16 and 160 mM, and silica nanoparticles at a concentration of between 33.3 and 133.3 mM; and
- a second step, wherein to said solution A is added either (i) an aqueous solution comprising (NH₄)₂HPO₄ at a concentration of between 5 and 50 mM once the same solution A is heated to a temperature of between 30 and 50 °C or (ii) an alcohol solution comprising tetraethyl orthosilicate at a concentration of between 30 and 300 mM once the same solution A is heated to a temperature of between 0 and 10 °C.

Preferably, the method comprises a preliminary step for the preparation of the SiO₂ nanoparticles, wherein an alcohol solution comprising tetraethyl orthosilicate at a concentration of between 30 and 300 mM and with a pH of between 8 and 11 is maintained under agitation at a temperature between 20 and 40 °C.

Preferably, once the (NH₄)₂HPO₄ aqueous solution or the tetraethyl orthosilicate alcohol solution has been added, the resulting solution is maintained under agitation for between 18 and 30 hours.

Preferably, the (NH₄)₂HPO₄ aqueous solution or tetraethyl orthosilicate alcohol solution are added dropwise to the solution A.

Preferably, the solvent for the tetraethyl orthosilicate alcohol solution is ethanol.

A further object of the present invention is a silica based nanomaterial consisting of particles of a Zn salt supported on the surface of silica nanoparticles; wherein said Zn salt is Zn₃(PO₄)₂, characterized in that said nanomaterial has dimensions that are equal to or less than 100 nm by Transmission Electron Microscopy measurement.

Preferably, Zn₃(PO₄)₂ is present in a quantity of between 40 and 60% by weight in relation to the total weight of the nanomaterial.

The following are examples of non-limiting embodiments given purely by way of illustration.

### - Synthesis of the SiO₂ nanoparticles -

A three necked round bottom flask was filled with 50 mL of ethanol and 3 mL of an aqueous solution of ammonia at 28%. The resulting solution was maintained under agitation and heated to a temperature of 30 °C. At this point 1.7 mL of tetraethyl orthosilicate were added and the solution maintained firstly for 5 hours again at 30 °C and then for 16 hours at 25 °C. The SiO₂ nanoparticles were precipitated by means of centrifugation at 8000 rpm for 10 minutes and then again dispersed twice in a solution of ethanol and water. Finally, the nanoparticles thus obtained were dispersed in 10 mL of ethanol.

### - Synthesis of nanomaterials consisting of Zn₃(PO₄)₂ particles supported on silica nanoparticles -

100 mL were prepared of an aqueous solution comprising Zn(NO₃)₂·6H₂O at a concentration equal to 33.4 mM, 1,1,1-tri(hydroxymethylethane) at a concentration equal to 1%, and the silica nanoparticles dispersed in 10 mL of ethanol as described above. By means of the addition of ammonia the pH of this solution was raised to the value of 8.5. This solution was heated to 50 °C and maintained under vigorous agitation. Subsequently, to this solution were added dropwise 100 mL of an aqueous solution of 20 mM of (NH₄)₂HPO₄. The period of time for the addition lasted 30 minutes. The resulting solution was maintained under agitation at 50 °C for 24 hours, the nanomaterial was then collected by means of centrifugation, washed three times with water and ethanol, and finally redispersed in 15 mL of ethanol.

### - Synthesis of nanomaterials consisting of Zn₂SiO₄ particles supported on silica nanoparticles -

190 mL of an aqueous solution were prepared comprising Zn(NO₃)₂·6H₂O at a concentration equal to 17.6 mM, 1,1,1-tri(hydroxymethylethane) at a concentration equal to 0.5%, and the silica nanoparticles dispersed in 10 mL of ethanol as described above. By means of the addition of ammonia the pH of this solution was raised to the value of 8.5. This solution was cooled to 0 °C and maintained under vigorous agitation. Subsequently, to this solution was added dropwise a mixture composed of 10 mL of ethanol and 0.4 mL of tetraethyl orthosilicate. The period of time for the addition lasted 20 minutes. The resulting solution was maintained at 0 °C for 24 hours under agitation. The nanomaterial was collected by means of centrifugation, washed three times with water and ethanol, and finally redispersed in 15 mL of ethanol.

### - Material characterization -

The SiO2 nanoparticles produced were analyzed using the "Transmission Electron Microscopy (TEM)" technique. Using this technique an average diameter for the nanoparticles of 7416 nm was measured.

The SEM images obtained show that the dimensions of the nanomaterials do not vary in relation to those of the respective SiO₂ nanoparticles insofar as the dimensional contribution of the Zn₃(PO₄)₂ or Zn₂SiO₄ particles on the SiO₂ surface is virtually nil.

The nanomaterials thus obtained were tested as vulcanizing activators as a substitute for ZnO, demonstrating the ability thereof to ensure, in the same way as the latter, the efficient vulcanization of rubber compounds.

### EXAMPLES OF VULCANIZATION TESTS

Two comparison compounds were prepared (Compound A and Compound B), together with two compounds according to the invention, wherein the nanomaterials, object of the present invention, were used as vulcanizing activators. In particular, in the first comparison compound (Compound A) a vulcanization activator is not used, in the second comparison compound (Compound B) zinc oxide was used as a vulcanization activator, whilst in the two compounds according to the invention (Compound C and Compound D) the nanomaterial consisting of Zn₂SiO₄ particles supported on silica and the nanomaterial consisting of Zn₃(PO₄)₂ particles supported on silica were respectively used as the vulcanization activator.

The example compounds were obtained according to the procedure below:

### - preparation of the compounds -

### (1^{st} mixing step)

Before the start of the mixing, a mixer with tangential rotors and an internal volume of between 230 and 270 liters was loaded with the cross-linkable polymer base and the carbon black, thereby reaching a filling factor of 66-72%.

The mixer was operated at a speed of 40-60 revolutions/minute, and the mixture thus formed was discharged once a temperature of 140-160 °C had been reached.

### (2^{nd} mixing step)

The mixture obtained from the previous step was reworked in a mixer that was operated at a speed of 40-60 revolutions/minute and, thereafter, discharged once a temperature of 130-150 °C had been reached.

### (final mixing step)

To the mixture obtained from the previous step were added the sulfur, the vulcanization accelerants, the stearic acid and, where provided for, the ZnO in combination with the stearic acid or the nanomaterial according to the invention, reaching a fill factor of between 63-67%.

The mixer was operated at a speed of 20-40 revolutions/minute, and the mixture thus formed was discharged once a temperature of 100-110 °C had been reached.

Table I shows the compositions in phr of the four compounds described above.

**TABLE I**

| | A | B | C | D |
|---|---|---|---|---|
| Polymer Base | 100 | | | |
| Carbon black | 50 | | | |
| ZnO | -- | 1.5 | -- | -- |
| Nanomaterial 1 | -- | -- | 1.5 | -- |
| Nanomaterial 2 | -- | -- | -- | 1.5 |
| Stearic acid | 3 | 3 | 3 | 3 |
| Sulfur | 1.3 | | | |
| Accelerant | 1 | | | |
| Antioxidant | 1 | | | |

The polymer based used is natural rubber.

The carbon black used is classified as N330.

The nanomaterial 1 consists of Zn₂SiO₄ particles supported on silica.

The nanomaterial 2 consists of Zn₃(PO₄)₂ particles supported on silica.

N-tert-butyl-2-benzothiazylsulfenamide (TBBS) was used as a vulcanization accelerant.

N-(1,3-Dimethylbutyl)-N'-phenyl-p-phenylenediamine (6 PPD) was used as an antioxidant.

In order to evaluate the rheometric, mechanical and dynamic mechanical properties thereof, respective samples were prepared from the compounds of Table I and subjected to a series of tests.

In particular, the rheometric properties were measured according to the ISO 6502 standard; the mechanical properties were measured according to the ISO 37 standard.

The values obtained from the tests listed in Table II.

**TABLE II**

| | A | B | C | D |
|---|---|---|---|---|
| ML (dNm) | 3.6 | 3.5 | 3.6 | 3.7 |
| MH (dNm) | 15.5 | 20.3 | 17.8 | 18.1 |
| MH-ML(dNm) | 11.9 | 16.8 | 14.2 | 14.4 |
| t'10 (min) | 0.8 | 0.9 | 1.2 | 0.9 |
| t'50 (min) | 2.4 | 2.8 | 2.6 | 2.3 |
| t'90 (min) | 14.5 | 5.8 | 9.8 | 9.5 |
| TB (MPa) | 17.6 | 23.2 | 20.0 | 19.6 |
| 50% (MPa) | 1.5 | 1.8 | 1.4 | 1.5 |
| 100% (MPa) | 2.4 | 3.2 | 2.4 | 2.5 |
| 300% (MPa) | 7.5 | 13.9 | 10.4 | 10.5 |
| EB% (MPa) | 548 | 463 | 500 | 488 |

The values of Table II demonstrate the vulcanization activator activity of the nanomaterials, object of the present invention. Indeed, the results in relation to the properties indicated above demonstrate how the presence of the nanomaterials of the present invention (Compounds C and D), comparable to that of zinc oxide (Compound B) and different than an absence of a vulcanization activator (Compound A), facilitates the correct vulcanization of the compound.

In conclusion, the nanomaterials of the present invention make it possible to eliminate the use of zinc oxide in rubber compounds without, for this reason, compromising in any way the vulcanization of the same compound and, consequently, the mechanical characteristics thereof.

## Claims

1. Use as a vulcanization activator in compounds for the preparation of rubber products, of a silica based nanomaterial; said use being **characterized in that** said silica based nanomaterial consists of particles of a Zn salt chosen from between Zn₃(PO₄)₂ and Zn₂SiO₄ supported on the surface of silica nanoparticles.

2. Use according to claim 1, **characterized in that** said nanomaterial has dimensions equal to or less than 100 nm by Transmission Electron Microscopy measurement.

3. Use according to claim 1 or 2, **characterized in that** Zn₃(PO₄)₂ is present in a quantity of between 40 and 60% by weight in relation to the total weight of the nanomaterial.

4. Use according to claim 1 or 2, **characterized in that** Zn₂SiO₄ is present in a quantity of between 20 and 40% by weight in relation to the total weight of the nanomaterial.

5. Synthesis method for the preparation of a nanomaterial consisting of particles of a Zn salt chosen from between Zn₃(PO₄)₂ and Zn₂SiO₄ supported on the surface of silica nanoparticles; said method being **characterized in that** it comprises:
- a first step, wherein an aqueous solution A is
prepared with a pH of between 7.5 and 9.5 and comprising Zn(NO₃)₂
.6H₂O at a concentration of between 10 and 50 mM, 1,1,1-Tri(hydroxymethyl)ethane at a concentration of between 16 and 160 mM, and silica nanoparticles at a concentration of between 33.3 and 133.3 mM; and
- a second step, wherein to said solution A is added either (i) an aqueous solution comprising (NH₄)₂HPO₄ at a concentration of between 5 and 50 mM once the same solution A is heated to a temperature of between 30 and 50 °C, or (ii) an alcohol solution comprising tetraethyl orthosilicate at a concentration of between 30 and 300 mM once the same solution is heated to a temperature of between 0 and 10 °C.

6. Synthesis method according to claim 5, **characterized in that** it comprises a preliminary step for the preparation of the SiO₂ nanoparticles, wherein an alcohol solution comprising tetraethyl orthosilicate at a concentration of between 30 and 300 mM and with a pH of between 8 and 11 is maintained under agitation at a temperature of between 20 and 40 °C.

7. Synthesis method according to claim 5 or 6, **characterized in that**, once the (NH₄)₂HPO₄ aqueous solution or the tetraethyl orthosilicate alcohol solution has been added, the resulting solution is maintained under agitation for between 18 and 30 hours.

8. Synthesis method according to one the claims 5-7, **characterized in that** the (NH₄)₂HPO₄ aqueous solution or tetraethyl orthosilicate alcohol solution are added dropwise to the solution A.

9. Synthesis method according to one the claims 5-8, **characterized in that** the solvent for said tetraethyl orthosilicate alcohol solution is ethanol.

10. Silica based nanomaterial consisting of particles of a Zn salt supported on the surface of silica nanoparticles; wherein said Zn salt is Zn₃(PO₄)₂, **characterized in that** said nanomaterial has dimensions equal to or less than 100 nm by Transmission Electron Microscopy measurement.

11. Silica based nanomaterial according to claim 10, **characterized in that** Zn₃(PO₄)₂ is present in a quantity of between 40 and 60% by weight in relation to the total weight of the nanomaterial.

## Patentansprüche

1. Verwendung, als einen Vulkanisationsaktivator in Verbindungen für die Herstellung von Kautschukprodukten, eines Nanomaterials auf Siliziumdioxidbasis; wobei die Verwendung **dadurch gekennzeichnet ist, dass** das Nanomaterial auf Siliziumdioxidbasis aus Partikeln eines Zn-Salzes besteht, das zwischen Zn₃(PO₄)₂ und Zn₂SiO₄ ausgewählt wird, die auf der Oberfläche von Siliziumdioxid-Nanopartikeln getragen werden.

2. Verwendung nach Anspruch 1, **dadurch gekennzeichnet, dass** das Nanomaterial Abmessungen aufweist, die gleich oder kleiner als 100 nm sind, durch Transmissionselektronenmikroskopiemessung.

3. Verwendung nach Anspruch 1 oder 2, **dadurch gekennzeichnet, dass** Zn₃(PO₄)₂ in einer Menge zwischen 40 und 60 Gew.-%, bezogen auf das Gesamtgewicht des Nanomaterials, vorhanden ist.

4. Verwendung nach Anspruch 1 oder 2, **dadurch gekennzeichnet, dass** Zn₂SiO₄ in einer Menge zwischen 20 und 40 Gew.-%, bezogen auf das Gesamtgewicht des Nanomaterials, vorhanden ist.

5. Syntheseverfahren für die Herstellung eines Nanomaterials, das aus Partikeln eines Zn-Salzes besteht, das zwischen Zn₃(PO₄)₂ and Zn₂SiO₄ ausgewählt wird, die auf der Oberfläche von Siliziumdioxid-Nanopartikeln getragen werden; wobei das Verfahren **dadurch gekennzeichnet ist, dass** es umfasst:
- einem ersten Schritt, wobei eine wässrige Lösung A mit einem pH-Wert zwischen 7,5 und 9,5 hergestellt wird, und umfassend Zn(NO₃)₂
.6H₂O in einer Konzentration zwischen 10 und 50 mM,
1,1,1-Tri(hydroxymethyl)ethan in einer Konzentration zwischen 16 und 160 mM und Siliziumdioxid-Nanopartikel in einer Konzentration zwischen 33,3 und 133,3 mM; und
- einen zweiten Schritt, wobei zu der Lösung A entweder (i) eine wässrige Lösung, umfassend (NH₄)₂HPO₄ in einer Konzentration zwischen 5 und 50 mM, sobald die gleiche Lösung A auf eine Temperatur zwischen 30 und 50 °C erhitzt wird, oder (ii) eine Alkohollösung zugegeben wird, umfassend Tetraethylorthosilikat in einer Konzentration zwischen 30 und 300 mM, sobald die gleiche Lösung auf eine Temperatur zwischen 0 und 10 °C erhitzt wird.

6. Syntheseverfahren nach Anspruch 5, **dadurch gekennzeichnet, dass** es einen vorbereitenden Schritt für die Herstellung der SiO₂-Nanopartikel umfasst, wobei eine Alkohollösung, umfassend Tetraethylorthosilikat in einer Konzentration zwischen 30 und 300 mM und mit einem pH-Wert zwischen 8 und 11, unter Rühren bei einer Temperatur zwischen 20 und 40 °C gehalten wird.

7. Syntheseverfahren nach Anspruch 5 oder 6,
**dadurch gekennzeichnet, dass** nach Zugabe der wässrigen (NH₄)₂HPO₄-Lösung oder der Tetraethylorthosilikat-Alkohollösung die resultierende Lösung unter Rühren zwischen 18 und 30 Stunden lang gehalten wird.

8. Syntheseverfahren nach einem der Ansprüche 5 bis 7,
**dadurch gekennzeichnet, dass** die wässrige (NH₄)₂HPO₄-Lösung oder die Tetraethylorthosilikat-Alkohollösung tropfenweise zu der Lösung A gegeben wird.

9. Syntheseverfahren nach einem der Ansprüche 5 bis 8,
**dadurch gekennzeichnet, dass** das Lösungsmittel für die Tetraethylorthosilikat-Alkohollösung Ethanol ist.

10. Nanomaterial auf Siliziumdioxidbasis, bestehend aus Partikeln eines Zn-Salzes, die auf der Oberfläche von Siliziumdioxid-Nanopartikeln getragen werden; wobei das Zn-Salz Zn₃(PO₄)₂ ist, **dadurch gekennzeichnet, dass** das Nanomaterial Abmessungen aufweist, die gleich oder kleiner als 100 nm sind, durch Transmissionselektronenmikroskopiemessung.

11. Nanomaterial auf Siliziumdioxidbasis nach Anspruch 10,
**dadurch gekennzeichnet, dass** Zn₃(PO₄)₂ in einer Menge zwischen 40 und 60 Gew.-%, bezogen auf das Gesamtgewicht des Nanomaterials, vorhanden ist.

## Revendications

1. Utilisation en guise d'activateur de vulcanisation dans des composés destinés à la préparation de produits en caoutchouc, d'un nanomatériau à base de silice ; ladite utilisation étant **caractérisée en ce que** ledit nanomatériau à base de silice est constitué de particules d'un sel de Zn choisi parmi Zn₃(PO₄)₂ et Zn₂SiO₄ supportées sur la surface de nanoparticules de silice.

2. Utilisation selon la revendication 1, **caractérisée en ce que** ledit nanomatériau a des dimensions égales ou inférieures à 100 nm par mesure de microscopie électronique à transmission.

3. Utilisation selon la revendication 1 ou 2, **caractérisée en ce que** Zn₃(PO₄)₂ est présent en une quantité comprise entre 40 et 60 % en poids par rapport au poids total du nanomatériau.

4. Utilisation selon la revendication 1 ou 2, **caractérisée en ce que** Zn₂SiO₄ est présent en une quantité comprise entre 20 et 40 % en poids par rapport au poids total du nanomatériau.

5. Procédé de synthèse destiné à la préparation d'un nanomatériau constitué de particules d'un sel de Zn choisi parmi Zn₃(PO₄)₂ et Zn₂SiO₄ supportées sur la surface de nanoparticules de silice ; ledit procédé étant **caractérisé en ce qu'**il comprend :
- une première étape, dans lequel une solution A aqueuse est préparée avec un pH compris entre 7,5 et 9,5 et comprenant du Zn(NO₃)₂.6H₂O à une concentration comprise entre 10 et 50 mM, du 1,1,1-tri(hydroxyméthyl)éthane à une concentration comprise entre 16 et 160 mM, et des nanoparticules de silice à une concentration comprise entre 33,3 et 133,3 mM ; et
- une seconde étape, dans lequel à ladite solution A on ajoute soit (i) une solution aqueuse comprenant (NH₄)₂HPO₄ à une concentration comprise entre 5 et 50 mM une fois que cette solution A a été chauffée à une température comprise entre 30 et 50 °C, soit (ii) une solution alcoolique comprenant de l'orthosilicate de tétraéthyle à une concentration comprise entre 30 et 300 mM une fois que cette solution a été chauffée à une température comprise entre 0 et 10 °C.

6. Procédé de synthèse selon la revendication 5, **caractérisé en ce qu'**il comprend une étape préliminaire destinée à la préparation des nanoparticules de SiO₂, dans lequel une solution alcoolique comprenant de l'orthosilicate de tétraéthyle à une concentration comprise entre 30 et 300 mM et avec un pH compris entre 8 et 11 est maintenue sous agitation à une température comprise entre 20 et 40 °C.

7. Procédé de synthèse selon la revendication 5 ou 6, **caractérisé en ce que,** une fois que la solution aqueuse de (NH₄)₂HPO₄ ou la solution alcoolique d'orthosilicate de tétraéthyle a été ajoutée, la solution résultante est maintenue sous agitation pendant une durée comprise entre 18 et 30 heures.

8. Procédé de synthèse selon l'une des revendications 5 à 7,
**caractérisé en ce que** la solution aqueuse de (NH₄)₂HPO₄ ou la solution alcoolique d'orthosilicate de tétraéthyle sont ajoutées goutte à goutte à la solution A.

9. Procédé de synthèse selon l'une des revendications 5 à 8,
**caractérisé en ce que** le solvant pour ladite solution alcoolique d'orthosilicate de tétraéthyle est de l'éthanol.

10. Nanomatériau à base de silice constitué de particules d'un sel de Zn supportées sur la surface de nanoparticules de silice ; dans lequel ledit sel de Zn est Zn₃(PO₄)₂, **caractérisé en ce que** ledit nanomatériau a des dimensions égales ou inférieures à 100 nm par mesure de microscopie électronique à transmission.

11. Nanomatériau à base de silice selon la revendication 10, **caractérisé en ce que** Zn₃(PO₄)₂ est présent en une quantité comprise entre 40 et 60 % en poids par rapport au poids total du nanomatériau.
